# EUROPÄISCHE PATENTSCHRIFT

(11) **EP 1 624 116 B1**
(45) Veröffentlichungstag und Bekanntmachung des Hinweises auf die Patenterteilung: **06.05.2009**
(21) Anmeldenummer: 05016588.5
(22) Anmeldetag: 29.07.2005
(51) Int. Cl.: E02F 3/36, E02F 9/22, B60D 1/62

(54) **Hydraulikschnellkupplung**
Hydraulic quick coupler
Attache rapide hydraulique

(30) Priorität: 02.08.2004 DE 102004037459
(43) Veröffentlichungstag der Anmeldung: 08.02.2006
(73) Patentinhaber: Liebherr-Hydraulikbagger GmbH, 88457 Kirchdorf/Iller (DE)
(72) Erfinder: Mieger, Rolf, 88457 Kirchdorf/Iller (DE); Zitterbart, Thomas, 89165 Dietenheim (DE)
(74) Vertreter: Laufhütte, Dieter

(56) Entgegenhaltungen:
- EP-A- 0 434 472
- EP-A- 1 365 074
- WO-A-03/029567
- DE-A1- 10 159 417
- DE-T2- 60 102 711
- FR-A- 2 687 115
- SE-B- 468 320
- US-A- 4 738 463
- US-A- 5 829 337
- US-B1- 6 196 595

## Beschreibung

Die Erfindung betrifft eine Hydraulikschnellkupplung nach dem Oberbegriff des Anspruchs 1, die beispielsweise in der DE-A1-10159417 und der US-A-4738463 gezeigt wird.

Hydraulikschnellkupplungen sind bei Kranen, Umschlaggeräten oder Baumaschinen, wie beispielsweise Baggern zum Kuppeln von Bauteilen, die für einen bestimmten Einsatz oder für den Transport getrennt oder umgerüstet werden müssen, weithin verbreitet.

Dabei erfolgt die mechanische Verbindung der Bauteile meist durch Schnellwechselsysteme, wobei das Kuppeln der Energieübertragungsleitungen vor allem bei größeren Querschnitten mit erheblichem Kraft- und Zeitaufwand verbunden ist.

Ein Beispiel für eine Hydraulikkupplung ist in der Druckschrift DE-A1-10159417 gezeigt. Hierbei handelt es sich um eine Hydraulikschnellkupplung zum Ankuppeln eines Werkzeugs an den Ausleger eines Hydraulikbaggers und dergleichen, mit zwei miteinander zusammenwirkenden Schnellkupplungsteilen, die jeweils auf den Bauteilen angeordnet sind, wobei ein Schnellkupplungsteil zumindest einen Führungsbolzen aufweist, der in eine Zentrierbohrung des gegenüberliegenden Schnellkupplungsteils eingreifen kann, wobei in jedem Schnellkupplungsteil Kupplungsstecker bzw. Kupplungsmuffen zur Verbindung der Hydraulikleitungen vorgesehen sind und wobei zumindest ein Schnellkupplungsteil beweglich auf einem Bauteil angeordnet ist, um die beiden Schnellkupplungsteile zu verbinden bzw. zu trennen, wobei zumindest eines der Schnellkupplungsteile federnd in einem Tragrahmen gelagert ist.

Die Druckschrift US-A-4738463 offenbart eine weitere hydraulische Kupplungsvorrichtung, welche während eines Ankuppelvorgangs eines Arbeitsgerätes an ein Fahrzeug automatisch eine Verbindung der Hydraulikanschlüsse zwischen Arbeitsgerät und Fahrzeug herstellt.

Aufgabe der Erfindung ist es, eine Hydraulikschnellkupplung zu schaffen, die einerseits den Kraft- und Zeitaufwand reduziert und die andererseits durch Verwendung leckölfreier Einzelkupplungen die Verschmutzung des Hydrauliköls vermindert.

Erfindungsgemäß wird die Aufgabe durch die Kombination der Merkmale des Anspruchs 1 gelöst.

Demnach werden bei einer Hydraulikschnellkupplung nach dem Oberbegriff des Anspruchs 1 zwei miteinander zusammenwirkende Schnellkupplungsteile vorgesehen, wobei das bewegliche und im Tragrahmen federnd gelagerte Schnellkupplungsteil, längsverschieblich auf einer Linearführung sitzt. Durch die federnde Lagerung der Schnellkupplung im Tragrahmen wird die Kupplung von auf die Bautele wirkenden Kräften freigehalten.

Das bewegliche und im Tragrahmen federnd gelagerte Schnellkupplungsteil ist in seiner geöffneten Stellung mittels eines Führungsmittels fixiert. Das Führungsmittel besteht aus einem Führungsbolzen, der in die Kupplungsmuffe in geöffneter Stellung des Schnellkupplungsteils eingreift. In dieser Stellung wird durch den Führungsbolzen eine Führung des federnd gelagerten Schnellkupplungsteils ermöglicht, so dass die auf diesen wirkenden Schlauchkräfte aufgenommen werden können. Beim Einkuppeln des Schnellkupplungsteils, das heißt beim Bewegen in die geschlossene Stellung, fährt das Schnellkupplungsteil mit seiner Zentrierbohrung auf zweite Führungsbolzen des anderen gegenüberliegenden Schnellkupplungsteils. In der gekuppelten Position gibt der Führungsbolzen, die entsprechende Kupplungsmuffe frei. Die entsprechende Festlegung des Schnellkupplungsteils wird durch den Führungsbolzen des gegenüberliegenden Schnellkupplungsteils übernommen.

Das bewegliche und im Tragrahmen federnd gelagerte Schnellkupplungsteil ist über eine Kolben-Zylinderanordnung auf den feststehenden Schnellkupplungsteil hin, auf am feststehenden Schnellkupplungsteil angeordnete zweite Führungsbolzen, verschiebbar. Zur Verriegelung der Schnellkupplungsteile im eingekoppelten Zustand wird beispielsweise auch durch eine permanente Druckbelastung der Kolben-Zylinderanordnung bzw. durch entsprechende Sperrventile die gekuppelte Stellung der beiden Schnellkupplungsteile fixiert.

Bevorzugte Ausgestaltungen der Erfindung ergeben sich aus den sich an den Hauptanspruch anschließenden Unteransprüchen. Demnach kann bevorzugt mindestens eine Verriegelung vorhanden sein, über die die Schnellkupplungsteile im gekuppelten Zustand miteinander verriegelbar sind. Dabei kann die Verriegelung mindestens einen der in die entsprechende Zentrierbohrung eingefahrenen zweiten Führungsbolzen festlegen.

Weitere Merkmale, Einzelheiten und Vorteile der Erfindung werden anhand von in den Figuren dargestellten Ausführungsbeispielen näher erläutert. Es zeigen:
- Fig. 1:: eine perspektivische Ansicht einer ersten Ausführungsvariante einer Hydraulikschnellkupplung,
- Fig. 2:: eine Seitenansicht, teilweise geschnitten, der Anordnung gemäß Figur 1 in einer ersten Position,
- Fig. 3:: eine Darstellung gemäß Figur 2 aus der Sicht von oben,
- Fig. 4:: ein Schnitt entsprechend der Schnittlinie IV - IV in Figur 3,
- Fig. 5:: ein Schnitt entsprechend der Schnittlinie V - V gemäß Figur 3,
- Fig. 6:: eine Ansicht von vorne auf das bewegliche Schnellkupplungsteil entsprechend einer Ausführungsform gemäß der Figuren 1 bis 5,
- die Fig. 7, 8:: andere federnde Aufhängungen für das bewegliche Schnellkupplungsteil und

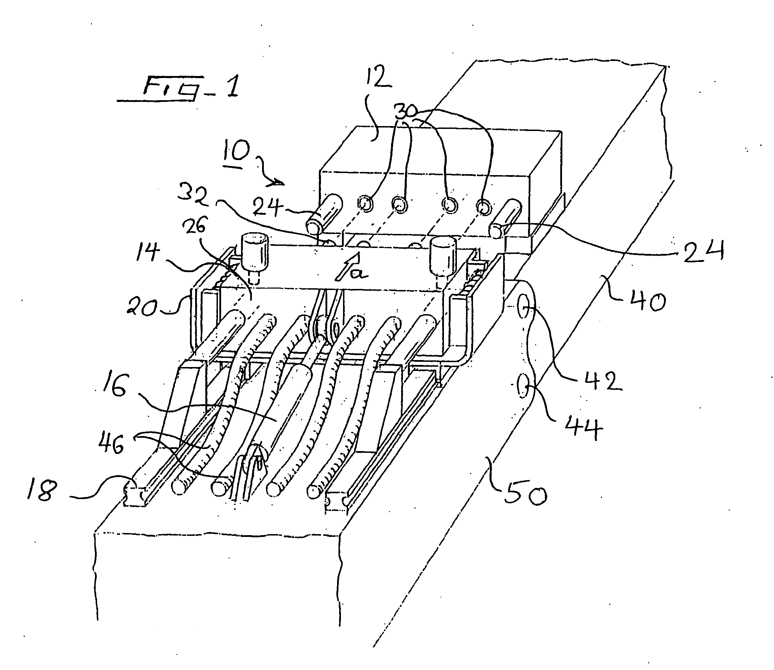

In der Figur 1 sind schematisch zwei Bauteile 40 und 50 eines Hydraulikbaggers gezeigt, die an zwei Einbolzpunkten 42 und 44 miteinander verbunden sind. Auf den Bauteilen 40 und 50 ist eine Hydraulikschnellkupplung 10 angeordnet. Über die Hydraulikschnellkupplung 10 werden auf den jeweiligen Bauteilen 40 und 50 verlaufende Hydraulikleitungen 46 miteinander verbunden. Die Hydraulikleitungen 46 sind aus Vereinfachungsgründen nur auf dem Bauteil 50 gezeigt und verlaufen in ähnlicher Weise auf dem Bauteil 40. Auf dem Bauteil 40 ist ein Schnellkupplungsteil 12 fest angeordnet, beispielsweise verschweißt bzw. verschraubt. Das Schnellkupplungsteil weist einerseits seitlich Führungsbolzen 24 auf. Mittig sind Kupplungsmuffen 30 vorhanden. Diese Kupplungsmuffen sind in nicht dargestellter Art und Weise mit entsprechenden Hydraulikleitungen, die auf dem Bauteil 40 verlaufen, verbunden. Auf dem Bauteil 50 ist ein beweglicher Schnellkupplungsteil 14 angeordnet. In der hier dargestellten Ausführungsvariante ist das Schnellkupplungsteil 14 über einen Tragrahmen 20, in welchem dieses gelagert ist, längsverschieblich auf einer Linearführung 18 geführt. Die Linearverschiebung erfolgt über eine Kolben-Zylinderanordnung 16. Über die Kolben-Zylinderanordnung 16 kann also der verschiebliche Schnellkupplungsteil 14 in Pfeilrichtung a auf den feststehenden Schnellkupplungsteil 12 hinbewegt werden, sodass die Führungsbolzen 24 in entsprechend in dem beweglichen Schnellkupplungsteil 14 vorgesehene Zentrierbohrungen 26 einfahren. Hierdurch werden die beiden Schnellkupplungsteile richtig gegeneinander ausgerichtet, sodass entsprechende Kupplungsstecker 32, die am beweglichen Schnellkupplungsteil angeordnet sind, in die entsprechenden Kupplungsmuffen 30 am feststehenden Schnellkupplungsteil 12 einfahren können.

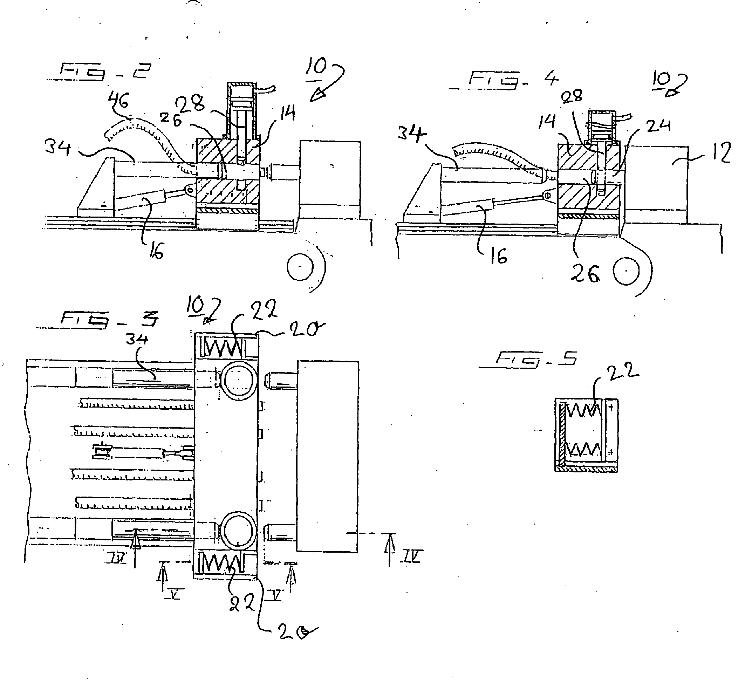

Diese Situation ist insbesondere in den Figuren 2 bis 4 dargestellt. In Figur 2 ist das bewegliche Schnellkupplungsteil 14 in zurückgezogener Position gezeigt, in welcher die Kolben-Zylinderanordnung 16 eingezogen ist.

In gleicher Position ist die Hydraulikschnellkupplung 10 in der Draufsicht gemäß Figur 3 gezeigt. Dagegen ist in der Figur 4 die Hydraulikschnellkupplung in eingekuppeltem Zustand gezeigt. Das bedeutet, dass das bewegliche Schnellkupplungsteil 14 über die Kolben-Zylinderanordnung 16 in Richtung zum feststehenden Schnellkupplungsteil 12 bewegt wurde, sodass die Führungsbolzen 24 in die entsprechenden Zentrierbohrungen 34 einfahren. In der entsprechend gekuppelten Stellung wird die Hydraulikschnellkupplung 10 über einen Verriegelungsbolzen 28 festgelegt. Der Verriegelungsbolzen 28 ist in hier dargestellter Art und Weise hydraulisch bewegbar und tritt durch ein entsprechendes Durchsteckloch durch den Führungsbolzen 24 hindurch (vgl. Figur 4).

Das bewegliche Schnellkupplungsteil 14 ist über Federn 22 im Tragrahmen 20 gelagert. Einen entsprechenden Schnitt durch die federnde Lagerung zeigt die Figur 5. Hierdurch wird sichergestellt, dass die Schnellkupplungsteile beim Kuppeln ohne Verkantungen miteinander verbunden werden können.

In den Figuren 1 bis 4 ist zusätzlich ein Führungsmittel 34 in Form eines Führungsbolzens gezeigt, der in zurückgezogener Stellung des Schnellkupplungsteils 14 in die Zentrierbohrungen 26 eingreift. Hierdurch wird das bewegliche Schnellkupplungsteil auch in seiner zurückgezogenen Stellung, wie sie in den Figuren 1, 2 und 3 gezeigt ist festgelegt, so dass entsprechende Kräfte und Momente, die durch die Hydraulikleitungen 46 auf das federnd gelagerte Schnellkupplungsteil 14 einwirken, ausgeglichen werden.

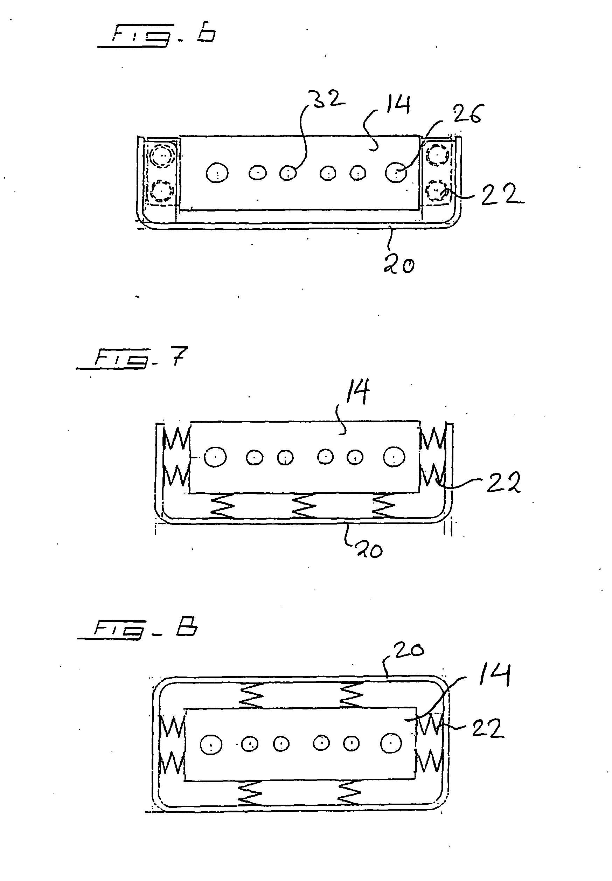

In den Figuren 6, 7 und 8 sind unterschiedliche federnde Aufhängungen des beweglichen Schnellkupplungsteils 14 im Tragrahmen 20 gezeigt. Wie den Figuren im einzelnen zu entnehmen ist, sind die Tragrahmen 20 hier unterschiedlich ausgebildet und die Federn 22 in unterschiedlicher Art und Weise angeordnet. Hier sind natürlich nur Ausführungsbeispiele dargestellt, die beliebig im Rahmen der Erfindung variiert werden können.

## Patentansprüche

1. Hydraulikschnellkupplung (10) zum Kuppeln von Bauteilen (40, 50) von Kranen, Umschlaggeräten oder Baumaschinen, die beispielsweise für einen bestimmten Einsatz oder für den Transport getrennt oder umgerüstet werden, mit zwei miteinander zusammenwirkenden Schnellkupplungsteilen (12, 14), die jeweils auf den Bauteilen (40, 50) angeordnet sind, wobei ein Schnellkupplungsteil (12) zumindest einen Führungsbolzen (24) aufweist, der in eine Zentrierbohrung (26) des gegenüberliegenden Schnellkupplungsteils (14) eingreifen kann, wobei in jedem Schnellkupplungsteil (12, 14) Kupplungsstecker (32) bzw. Kupplungsmuffen (30) zur Verbindung der Hydraulikleitungen vorgesehen sind und wobei zumindest ein Schnellkupplungsteil (14) beweglich auf einem Bauteil (50) angeordnet ist, um die beiden Schnellkupplungsteile (12, 14) zu verbinden bzw. zu trennen, wobei zumindest eines der Schnellkupplungsteile (14) federnd in einem Tragrahmen (20) gelagert ist,
**dadurch gekennzeichnet,**
**dass** das bewegliche und im Tragrahmen (20) federnd gelagerte Schnellkupplungsteil (14) längsverschieblich auf einer Linearführung (18) sitzt, wobei es in seiner geöffneten Stellung mittels einem Führungsmittel in Form von Führungsbolzen (34) fixiert ist und wobei das bewegliche und im Tragrahmen (20) federnd gelagerte Schnellkupplungsteil (14) über eine erste Kolben-Zylinderanordnung (16) auf den feststehenden Schnellkupplungsteil (12) hin, auf am feststehenden Schnellkupplungsteil (12) angeordnete zweite Führungsbolzen (24), schiebbar ist.

2. Hydraulikschnellkupplung nach einem der vorhergehenden Ansprüche, **dadurch gekennzeichnet, dass** mindestens eine Verriegelung (28) vorhanden ist, die die Schnellkupplungsteile (12, 14) im gekuppelten Zustand miteinander verriegelt.

3. Hydraulikschnellkupplung nach Anspruch 2, **dadurch gekennzeichnet, dass** die Verriegelung (28) den mindestens einen der in die entsprechende Zentrierbohrung (26) eingefahrenen zweiten Führungsbolzen (24) festlegt.

## Claims

1. Hydraulic quick coupling (10) for the coupling of structural components (40, 50) of cranes, cargo-handling machinery or construction machinery, which are separated or reset, for example, for a specific use or for transport, having two interacting quick-coupling parts (12, 14) which are arranged respectively on the structural components (40, 50), one quick-coupling part (12) having at least one guide bolt (24) which can engage in a centering bore (26) of the quick-coupling part (14) lying opposite it, each quick-coupling part (12, 14) being provided with coupling plugs (32) or coupling sleeves (30) for the connection of the hydraulic lines, and at least one quick-coupling part (14) being arranged movably on one structural component (50) in order to connect or separate the two quick-coupling parts (12, 14), at least one of the quick-coupling parts (14) being spring-mounted in a support frame (20), **characterized in that** the movable quick-coupling part (14) spring-mounted in the support frame (20) sits longitudinally displaceably on a linear guide (18) and is fixed in its open position by a guide means in the form of guide bolts (34), and the movable quick-coupling part (14) spring-mounted in the support frame (20) can be displaced via a first piston/cylinder arrangement (16) towards the fixed quick-coupling part (12), on second guide bolts (24) arranged on the fixed quick-coupling part (12).

2. Hydraulic quick coupling according to Claim 1, **characterized in that** at least one lock (28) is provided which locks the quick-coupling parts (12, 14) to one another in the coupled state.

3. Hydraulic quick coupling according to Claim 2, **characterized in that** the lock (28) secures the at least one of the second guide bolts (24) driven into the corresponding centering bore (26).

## Revendications

1. Raccord rapide hydraulique (10) pour le couplage de parties de construction (40, 50) de grues, appareils de transbordement ou machines de construction, qui sont séparées ou rajustées par exemple pour une utilisation définie ou pour le transport, avec deux parties de raccord rapide coopérantes (12, 14), qui sont disposées respectivement sur les parties de construction (40, 50), où une partie de raccord rapide (12) présente au moins un boulon de guidage (24) qui peut s'engager dans un perçage de centrage (26) de la partie de raccord rapide opposée (14), où sont prévues dans chaque partie de raccord rapide (12, 14) des prises de couplage (32) respectivement manchons de couplage (30) pour relier les conduites hydrauliques, et où au moins une partie de raccord rapide (14) est disposée d'une manière mobile sur une pièce de construction (50) pour relier respectivement séparer les deux parties de raccord rapide (12, 14), où au moins une des parties de raccord rapide (14) est logée élastiquement dans un châssis de support (20),
**caractérisé en ce que**
la partie de raccord rapide (14) mobile et logée élastiquement dans le châssis de support (20) repose, en étant déplaçable longitudinalement, sur un guidage linéaire (18), où dans sa position ouverte, elle est fixée par un moyen de guidage sous forme de boulons de guidage (34), et où la partie de couplage rapide (14) mobile et logée élastiquement dans le châssis de support (20) peut être poussée par un premier agencement à piston-vérin (16) vers la partie de raccord rapide fixe (12), sur des deuxièmes boulons de guidage (24) disposés à la partie de raccord rapide fixe (12).

2. Raccord rapide hydraulique selon la revendication précédente, **caractérisé en ce qu'**au moins un verrouillage (28) est prévu qui verrouille les parties de raccord rapide (12, 14) dans l'état accouplé l'une avec l'autre.

3. Raccord rapide hydraulique selon la revendication 2, **caractérisé en ce que** le verrouillage (28) fixe le au moins un des deuxièmes boulons de guidage (24) insérés dans le perçage central correspondant (26).
